**Europäisches Patentamt**

**European Patent Office**

**Office européen des brevets**

(19)

(11) Veröffentlichungsnummer: **0 185 239 B1**

(12) # EUROPÄISCHE PATENTSCHRIFT

(45) Veröffentlichungstag der Patentschrift: **24.07.91**

(51) Int. Cl.⁵: **G06K 19/08, B42D 15/02**

(21) Anmeldenummer: **85115226.4**

(22) Anmeldetag: **30.11.85**

(54) **Identkarte zum Lesen unter Verwendung eines magnetischen Systems.**

(30) Priorität: **20.12.84 DE 3446412**

(43) Veröffentlichungstag der Anmeldung:
**25.06.86 Patentblatt 86/26**

(45) Bekanntmachung des Hinweises auf die
Patenterteilung:
**24.07.91 Patentblatt 91/30**

(84) Benannte Vertragsstaaten:
**AT BE CH DE FR GB IT LI LU NL SE**

(56) Entgegenhaltungen:
**DE-A- 2 802 430**
**DE-A- 2 838 604**

**IBM TECHNICAL DISCLOSURE BULLETIN,
Band 26, Nr. 9, Februar 1984, Seite 4783, IBM,
New York, US; G.P. DOUBLE: "Information
card and reader"**

(73) Patentinhaber: **Georg Hartmann GmbH & Co.
KG
Mercedesstrasse 17
W-7000 Stuttgart 50(DE)**

(72) Erfinder: **Hartmann, Hans
Emser Strasse 14
W-7000 Stuttgart 50(DE)**

(74) Vertreter: **Dreiss, Hosenthien & Fuhlendorf
Gerokstrasse 6
W-7000 Stuttgart 1(DE)**

## Beschreibung

Die Erfindung betrifft eine Ausweiskarte zum Lesen unter Verwendung eines magnetischen Systems mit mindestens einer Schutzplatte zum Schutz und zur Halterungeine blattförmigen Datenträgers, wobei dieser Datenträger aus einem ein Magnetfeld beeinflussendem Material besteht und unterschiedlich auf das Magnetfeld wirkende, die Daten abgebende Bereiche aufweist.

Eine solche aus der DE-OS 28 38 604 bekannte Ausweiskarte weist als Schutzplatten Kunststoffplatten auf. Solche Kunststoffplatten unterliegen einem starken mechanischen Verschleiß, sie haben ein ungünstiges Temperaturverhalten bei tiefen Temperaturen, neigen zur Rissebildung und zum Brechen und bei Temperaturen ab 60° treten starke Deformationen auf. Durch Weichmacherwanderung neigen diese Schutzplatten mit der Zeit auch unter Normalbedingungen zum Verspröden. Es sind deshalb relativ häufig Ersatzkarten erforderlich.

Aus dem IBM Technical Disclosure Bulletin, Vol.26, No.9, February 1984, ist eine Ausweiskarte bekannt, die in einer Nut einer einzigen Schutzplatte einen streifenförmigen, magnetisierbaren Datenträger aufweist, der bündig mit der Schutzplattenoberfläche in der Nut aufgenommen ist.

Es ist bekannt, bei solchen Ausweiskarte ebenfalls eine Kunststoffplatte als Schutzplatte zu verwenden, wodurch oben genannte Nachteile auch bei einer solchen Ausweiskarte vorhanden sind.

In Vermeidung dieser Nachteile liegt der vorliegenden Erfindung die Aufgabe zugrunde, eine Ausweiskarte der eingangs genannten Art zu schaffen, die gegen Umwelteinflüsse widerstandsfähig ist und eine lange Lebensdauer bei sicherem Schutz des Datenträgers aufweist.

Zur Lösung dieser Aufgabe sieht die Erfindung im Falle einer Ausweiskarte,welche die Merkmale des Oberbegriffs des Anspruchs 1 aufweist, vor, daß die zwei Schutzplatten aus nicht magnetisierbarem Metall, nämlich aus federhart ausgewalztem Bronzeblech bestehen und daß der Datenträger zwischen den beiden Schutzplatten in einer Schicht aus Kleber, Kunststoff oder Lot aufgenommen ist und die beiden Schutzplatten über diese Schicht fest miteinander verbunden sind. Eine alternative Lösung der Aufgabe bei einer Ausweiskarte, die die Merkmale des Oberbegriffs des Anspruchs 12 aufweist, besteht erfindungsgemäß darin, daß die Schutzplatte aus nicht magnetisierbarem Metall, nämlich aus federhart ausgewalztem Bronzeblech besteht, und daß der Datenträger über eine Schicht aus Kleber, Kunststoff oder Lot in der Nut festgehalten ist. Hierdurch ist eine hohe Lebensdauer der Ausweiskarte gegeben. Die Schutzplatten können ggf. oberflächenveredelt sein. Zur Gewichtseinsparung sind die Schutzplatten relativ dünn und haben bspw. eine Dicke von nur etwa 0,2mm. Die Dicke der Schicht beträgt etwa 0,4mm. Insgesamt wird somit eine bspw. nur 0,8mm dicke Ausweiskarte bereitgestellt, die im Gebrauch sehr biegeelastisch ist und starke Durchbiegungen ohne bleibende Verformung aushält.

Eine besonders lange Lebensdauer und wesentliche Herabsetzung der Knickgefahr kann dadurch erreicht werden, daß die Schicht aus dauerelastischem Material besteht, vorzugsweise aus Gummi, einem gummiähnlichen Kunststoff, Acrylatkleber oder dgl.

Bei einer Ausweiskarte, bei der die Daten abgebenden unterschiedlich auf das Magnetfeld wirkenden Bereiche Durchbrüche sind können diese mit dem Werkstoff der die Schutzplatten fest verbindenden Schicht ausgefüllt sein.

Besonders vorteilhaft kann in einer der Schutzplatten eine Aussparung vorgesehen sein, in der ein optisch lesbarer Datenträger vorzugsweise eine Fotografie etwa bündig mit der Schutzplatte eingepasst und durch die Kleber- oder Kunststoffschicht gehalten sein. Hierdurch ist der optisch lesbare Datenträger weitgehend gegen Beschädigungen und Verschleiß geschützt.

Um Fälschungen möglichst zu erschweren kann die Kleber- oder Kunststoffschicht aus einem aushärtbarem Material bestehen, das während der Verarbeitung noch fließßfähig ist.

Die Erfindung ist nachfolgend anhand der beiliegenden Zeichnungen eines bevorzugten Ausführungsbeispiels näher erläutert. Es zeigen:

| Figur 1 | eine Draufsicht auf eine Ausweiskarte |
| Figur 2 | eine entsprechende Draufsicht auf die in Fig. 1 dargestellte Ausweiskarte unter Weglassung der oberen Schutzplatte, |
| Figur 3 | einen Schnitt durch die in Fig. 1 dargestellte Ausweiskarte entlang der Linie III-III. |
| Figur 4 | einen der Fig. 3 entsprechenden Schnitt einer anderen Ausführungsform einer Ausweiskarte |

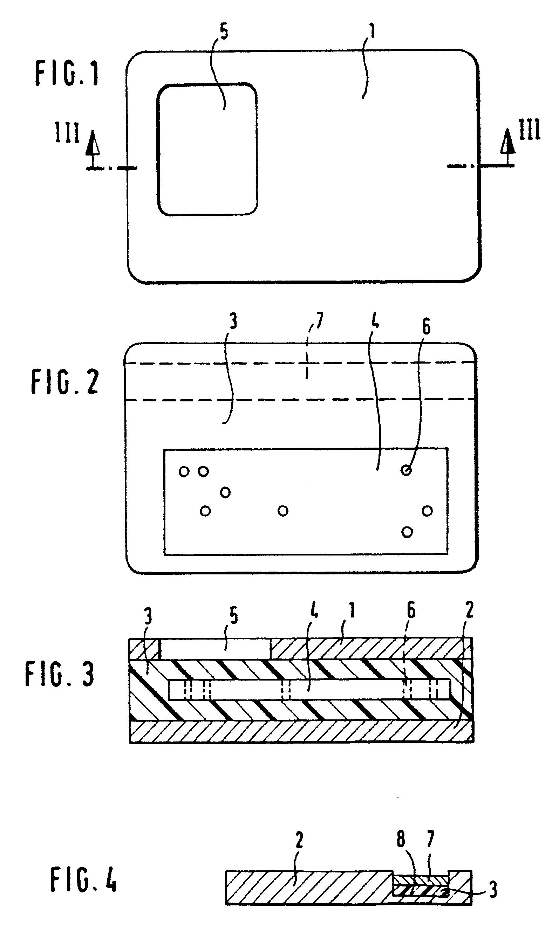

Die beispielsweise dargestellte Ausweiskarte besteht aus einer oberen Schutzplatte 1 und einer unteren Schutzplatte 2 zwischen denen in einer Schicht 3 aus Gummi, gummielastischem Werkstoff, insbesondere, Kunststoff, Kleber oder Lot ein Datenträger 4 eingebettet ist. Bei der Schnittdarstellung in der Fig. 3 ist die Schichtdicke wesentlich überhöht ge- zeigt. Die Dicke der Schutzplatten 1 und 2 beträgt nur etwa 0,2 mm. Die Schichtdicken des Klebers oder dgl. zwischen den Schutzplatten 1, 2 und dem Datenträger 4 hat etwa nur die gleiche Größenoronung, so daß die Gesamtdikke der Identkarte nur etwa 0,8 bis 1 mm beträgt.

Die Schutzplatten 1, 2 selbst bestehen vorzugsweise aus federhart ausgewalztem Bronzeblech (Cn-Sn-Legierung), das relativ korrosionsbeständig ist und hierzu noch oberflächen- veredelt sein kann, so daß auch bei häufigem Gebrauch nur eine geringe Abnutzung entsteht. Um auch optisch die Ausweiskarte unterscheiden zu können ist in der oberen Schutzplatte 1 in einer Aussparung 5 ein Lichtbild, ein Firmenzeichen oder eine sonstige auf einem Ausweis übliche Kennzeichnung möglichst bündig eingepasst und so gegen Beschädigung geschutzt.

Der Datentrager 4 weist in bekannter Weise Durchbrüche 6 auf, die in ihrer Gesamtheit die unveränderbaren Daten der Ausweiskarte abgeben. Dabei besteht der Datenträger 4 aus einem ein Magnetfeld beeinflussendem Material bspw. aus magnetisierbarem Metall um so die Daten mit einem magnetischem System lesen zu können.

Zusätzlich kann parallel zum Datenträger 4 ein weiterer Datenträger 7 bspw. ein Magnetband angeordnet sein durch das durch Änderung der Magnetisierung Daten veränderbar gespeichert werden können bspw. zur elektronischen Gebührenabbuchung oder ähnlichem, wie dies bspw. auch zum münzfreiem Telefonieren bekannt ist. Der weitere Datenträger 7 kann zweckmäßigerweise zwischen den Schutzplatten 1, 2 neben dem erstgenannten Datenträger 4 angeordnet sein, so daß auch er vollkommen durch die Schutzplatten 1, 2 geschützt ist. Eine weitere Möglichkeit besteht in der Anordnung des weiteren Datenträgers 7 zwischen den Schutzplatten 1 , 2 neben dem Datenträger 4. Eine weitere Anordnung des weiteren Datenträgers 7 kann in einer Aussparung oder einem Durchbruch einer der Schutzplatten 1, 2 folgen. Die Magnetisierbarkeit wird durch die Anordnung nahe der Oberfläche erleichtert allerdings ist auch die Beschädigungsgefahr größer.

Beim in Figur 4 dargestellten weiteren Ausführungsbeispiel einer Ausweiskarte ist nur eine Schutzplatte 2 vorgesehen, die auf einer Seite eine Nut 8 trägt in der eine weiterer Datenträger 7 etwa oberflächenbündig durch eine Schicht 3 fest gehalten ist.

## Patentansprüche

1. Ausweiskarte zum Lesen unter Verwendung eines magnetischen Systems, mit zwei Schutzplatten (1,2), zwischen denen ein blattförmiger Datenträger (4,) geschützt gehalten ist, wobei dieser Datenträger (4) aus einem ein Magnetfeld beeinflussendem Material besteht und unterschiedliche auf das Magnetfeld wirkende und die Daten abgebende Bereiche aufweist, **dadurch gekennzeichnet**, daß die zwei Schutzplatten (1,2) aus nichtmagnetisierbarem, federhart ausgewalztem Bronzeblech bestehen und daß der Datenträger (4,7) zwischen den beiden Schutzplatten (1,2) in einer Schicht (3) aus Kleber, Kunstsoff oder Lot aufgenommen ist und die beiden Schutzplatten (1,2) über diese Schicht (3) fest miteinander verbunden sind.

2. Ausweiskarte nach Anspruch 1, dadurch gekennzeichnet, daß die Schicht (3) aus dauerelastischem Material, vorzugsweise aus Gummi, einem gummiähnlichen Kunstsoff oder Acrylatkleber besteht.

3. Ausweiskarte nach Anspruch 1 oder 2, bei der die datenabgebenden unterschiedlich auf das Magnetfeld wirkenden Bereiche Durchbrüche (6) sind, dadurch gekennzeichnet, daß die die Daten abgebenden Durchbrüche (6) mit dem Werkstoff, der die Schutzplatten (1,2) fest verbindenden Schicht (3) ausgefüllt sind.

4. Ausweiskarte nach einem der vorangehenden Ansprüche, dadurch gekennzeichnet, daß in einer Schutzplatte (1) eine Aussparung (5) vorgesehen ist, in der ein optisch lesbarer Datenträger vorzugsweise eine Fotografie etwa bündig mit der Schutzplatte (1) eingepasst durch die Kleber- oder Kunststoffschicht (3) gehalten ist.

5. Ausweiskarte nach Anspruch 3 oder 4, dadurch gekennzeichnet, daß die Schicht (3) aus einem aushärtbarem Material besteht, das während der Verarbeitung fließfähig ist.

6. Ausweiskarte nach einem der Ansprüche 1 bis 5, dadurch gekennzeichnet, daß die Schutzplatten (1,2) eine Dicke von etwa 0,2mm aufweisen.

7. Ausweiskarte nach einem der Ansprüche 1 bis 6, dadurch gekennzeichnet, daß die Dicke der Schicht (3) zwischen den Schutzplatten (1,2) etwa 0,4mm beträgt.

8. Ausweiskarte nach einem der Ansprüche 1 bis 7, dadurch gekennzeichnet, daß zusätzlich ein weiterer magentisierbarer Datenträger (7) für veränderbare Daten vorgesehen ist.

9. Ausweiskarte nach Anspruch 8, dadurch gekennzeichnet, daß der weitere Datenträger (7) ein Magnetbandstück ist.

10. Ausweiskarte nach Anspruch 8 oder 9, dadurch gekennzeichnet, daß weitere Datenträger (7) zwischen den Schutzplatten (2) neben dem ersten Datenträger (4) angeordnet sind.

11. Ausweiskarte nach Anspruch 8 oder 9, dadurch gekennzeichnet, daß der weitere Datenträger (7) in einer Aussparung (Nut 8) oder einem Durchbruch einer der Schutzplatten (2) vorgesehen ist.

12. Ausweiskarte zum Lesen unter Verwendung eines magnetischen Systems mit einer Schutzplatte (2), die eine Nut (8) für einen Datenträger (7) aufweist, wobei der Datenträger (7) etwa bündig in der Nut (8) angeordnet ist, dadurch gekennzeichnet, daß die Schutzplatte (2) aus nicht magnetisierbarem federhart ausgewalztem Bronzeblech besteht, und daß der Datenträger (7) über eine Schicht (3) aus Kleber, Kunststoff oder Lot in der Nut (8) fest gehalten ist.

## Claims

1. An identity card for reading using a magnetic system comprising two protective plates (1, 2) between which a data carrier (4, 7) in sheet form is held in a protected condition, wherein said data carrier (4) comprises a material which influences a magnetic field, and has different regions which act on the magnetic field and output the data, characterised in that the two protective plates (1, 2) comprise non-magnetisable bronze sheet which is rolled out to a spring-hard condition and that the data carrier (4, 7) is accommodated between the two protective plates (1, 2) in a layer (3) of adhesive, plastics material or solder and the two protective plates (1, 2) are fixedly connected together by way of said layer (3).

2. An identity card according to claim 1 characterised in that the layer (3) is of a durably elastic material, preferably rubber, a rubber-like plastics material or acrylate adhesive.

3. An identity card according to claim 1 or claim 2 wherein the data-outputting regions which act differently on the magnetic field are through openings (6) characterised in that the data-outputting through openings (6) are filled with the material of the layer (3) which fixedly connects the protective plates (1, 2).

4. An identity card according to one of the preceding claims characterised in that provided in a protective plate (1) is a recess (5) in which an optically readable data carrier, preferably a photograph, is held by the adhesive or plastics layer (3), in a condition of being fitted substantially flush with the protective plate (1).

5. An identity card according to claim 3 or claim 4 characterised in that the layer (3) comprises a hardenable material which is capable of flow during the processing operation.

6. An identity card according to one of claims 1 to 5 characterised in that the protective plates (1, 2) are about 0.2 mm in thickness.

7. An identity card according to one of claims 1 to 6 characterised in that the thickness of the layer (3) between the protective plates (1, 2) is about 0.4 mm.

8. An identity card according to one of claims 1 to 7 characterised in that there is additionally provided a further magnetisable data carrier (7) for variable data.

9. An identity card according to claim 8 characterised in that the further data carrier (7) is a magnetic strip portion.

10. An identity card according to claim 8 or claim 9 characterised in that further data carriers (7) are arranged between the protective plates (2) beside the first data carrier (4).

11. An identity card according to claim 8 or claim 9 characterised in that the further data carrier (7) is provided in a recess (8) or a through opening in one of the protective plates (2).

12. An identity card for reading using a magnetic system comprising a protective plate (2) which has a groove (8) for a data carrier (7), the data carrier (7) being disposed substantially flush in the groove (8) characterised in that the protective plate (2) comprises non-magnetisable bronze sheet which is rolled out to a spring-hard condition and that the data carrier (7) is firmly held in the groove (8) by way of a layer (3) of adhesive, plastics material or solder.

## Revendications

1. Carte d'identification lisible par utilisation d'un système magnétique, comportant deux plaques protectrices (1, 2) entre lesquelles est maintenu de manière protégée un support de données (4, 7) en forme de feuille, ledit support de données (4) étant constitué en un matériau agissant sur un champ magnétique et présentant des zones diversifiées qui agissent sur le champ magnétique et délivrent les données, caractérisée par le fait que les deux plaques protectrices (1, 2) sont constituées en une tôle de bronze écroui et par le fait que le support de données (4, 7) est emprisonné entre les deux plaques protectrices (1, 2) dans une couche (3) en matière adhésive, en matière plastique ou en matériau à souder et que les deux plaques protectrices (1, 2) sont assemblées de manière fixe l'une à l'autre au moyen de cette couche (3).

2. Carte d'identification selon la revendication 1, caractérisée par le fait que la couche (3) est réalisée en un matériau à élasticité permanente de préférence en caoutchouc, en une matière plastique similaire au caoutchouc ou en une colle acrylique.

3. Carte d'identification selon la revendication 1 ou 2, sur laquelle les zones délivrant des données et agissant de manière différente sur le champ magnétique sont des perforations (6), caractérisée par le fait que lesdites perforations (6) délivrant les données sont remplies par le matériau de la couche (3) qui relie de manière fixe les plaques conductrices (1, 2).

4. Carte d'identification selon l'une des revendications précédentes, caractérisée par le fait que dans une plaque protectrice (1) est prévu un évidement (5) dans lequel un support de données optiquement lisible, de préférence une photographie, est inséré de manière à pratiquement venir au ras de la plaque protectrice (1) et maintenu en place par la couche (3) en matière adhésive ou en matière plastique.

5. Carte d'identification selon la revendication 3 ou 4, caractérisée par le fait que la couche (3) est constituée en un matériau durcissable qui peut être amené à l'état liquide pendant le travail de réalisation.

6. Carte d'identification selon l'une des revendications 1 à 5, caractérisée par le fait que les plaques protectrices (1, 2) ont une épaisseur d'environ 0,2 mm.

7. Carte d'identification selon l'une des revendications 1 à 6, caractérisée par le fait que l'épaisseur de la couche (3) entre les plaques protectrices 1, 2 est d'environ 0,4 mm.

8. Carte d'identification selon l'une des revendications 1 à 7, caractérisée par le fait qu'il est prévu complémentairement un autre support (7) magnétisable pour des données variables.

9. Carte d'identification selon la revendication 8, caractérisée par le fait que le support complémentaire (7) est un morceau de bande magnétique.

10. Carte d'identification selon la revendication 8 ou 9, caractérisée par le fait que d'autres supports de données (7) sont disposés entre les plaques protectrices (2) à côté du premier support de données (4).

11. Carte d'identification selon la revendication 8 ou 9, caractérisée par le fait que le support complémentaire de données (7) est prévu à l'intérieur d'un évidement (rainure 8) ou à l'intérieur d'une perforation de l'une des plaques protectrices (2).

12. Carte d'identification lisible par l'utilisation d'un système magnétique, comportant une plaque protectrice (2) qui présente une rainure (8) pour un support de données (7), ledit support de données (7) étant disposé à l'intérieur de la rainure (8) en venant pratiquement à ras de la surface, caractérisée par le fait que la plaque protectrice (2) est constituée en une tôle de bronze écroui, non magnétisable, et que le support de données (7) est maintenu de manière fixe dans la rainure (8) par une couche (3) en matière adhésive, en matière plastique ou en une matière de soudage.

FIG.1

FIG.2

FIG.3

FIG.4